# EUROPEAN PATENT APPLICATION

(11) **EP 1 962 008 A1**
(43) Date of publication of application: **27.08.2008**
(21) Application number: 08250497.8
(22) Date of filing: 11.02.2008
(51) Int. Cl.: F16L 23/10, F16L 21/06

(54) **Annular clamp**

(30) Priority: 21.02.2007 GB 0703361
(71) Applicant: Norma UK Limited, Weber Road New Greenham Park Newbury, Berkshire RG19 6HW (GB)
(72) Inventor: Baudoin, Manuel, Newbury RG14 2BA (GB); Hartig, Guenther, Lambourn RG17 8YP (GB)
(74) Representative: McLeish, Nicholas Alistair Maxwell

(57) **Abstract**

There is described an annular clamp (110) comprising a split ring (116) having two ends (118,120). There is a respective lug (122,124) integrally formed on each of the ends (118,120) of the split ring (116), with each lug extending outwardly from the split ring in a substantially radial direction. A respective lug aperture (126,128) is formed through each of the lugs (122,124) such that when the lugs are brought into a confronting relationship the lug apertures (126,128) together define a path for receiving a linear bolt (134). The annular clamp (110) further comprises a nut (132) for receiving a linear bolt (134). The nut (132) has a threaded aperture (133), and is moveably retained in one of the lug apertures (126,128) such that a longitudinal axis (AA') of the threaded aperture (133) is moveable within a plane defined by the split ring (116). There is also described a method of connecting two pipes using the annular clamp (110). The method comprises the steps of (a) ensuring the annular clamp is in an open configuration with the linear bolt extending through the other lug aperture and into threaded engagement with the nut; (b) aligning the pipes in a required connection position within the annular clamp whilst the linear bolt remains in threaded engagement with the nut; and (c) securing the annular clamp by tightening the nut and linear bolt until the lugs are in a confronting relationship.

## Description

### FIELD OF THE INVENTION

The present invention relates to an annular clamp. In particular, the present invention relates to an annular clamp for connecting pipes.

### BACKGROUND OF THE INVENTION

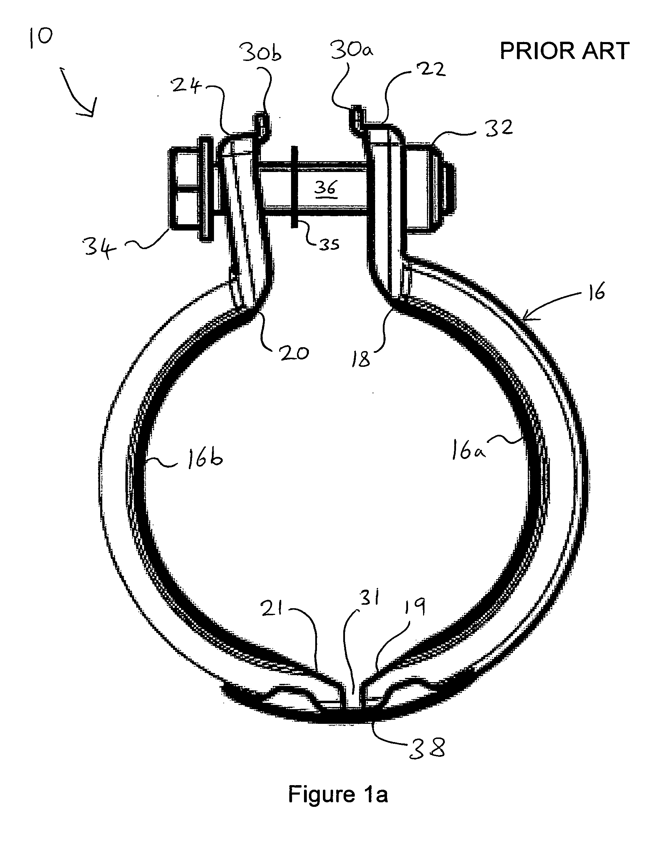

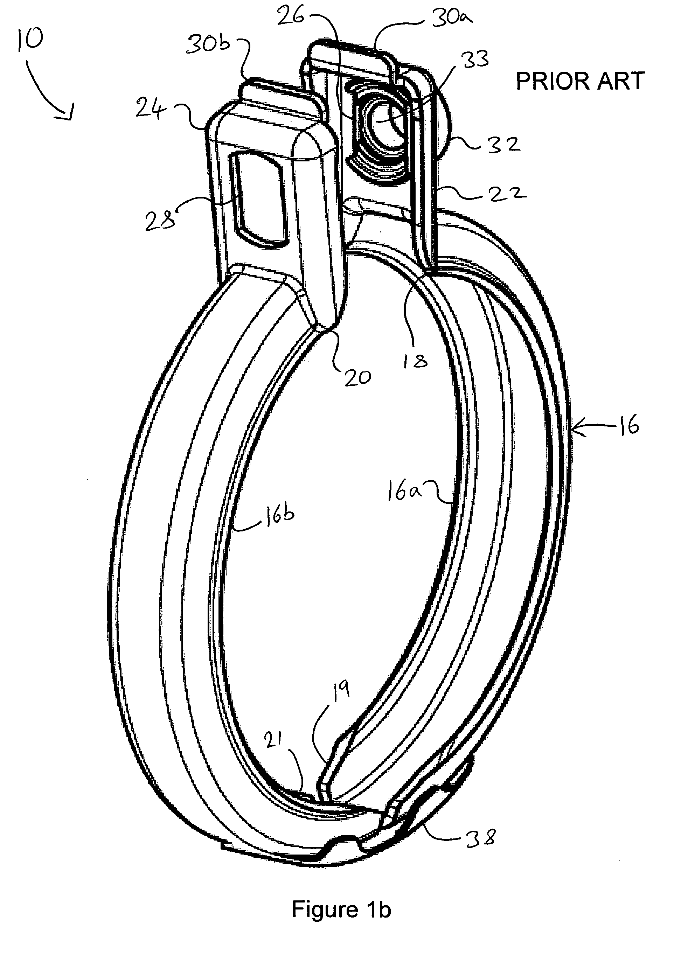

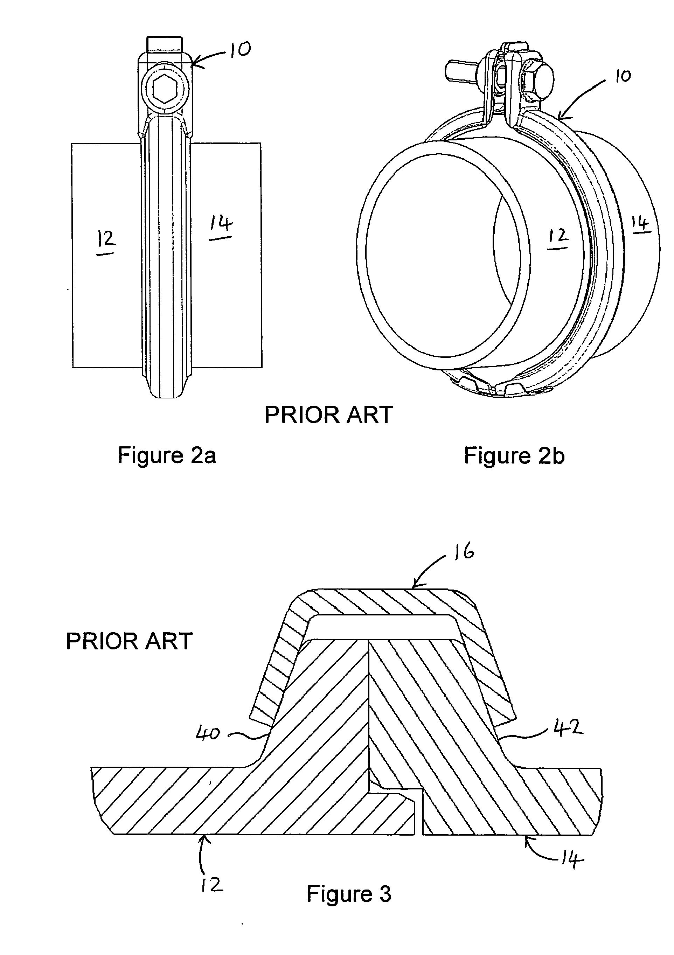

A variety of annular clamps are available to enable two pipes to be joined together. Such clamps are frequently used in the automotive industry. An example of a known annular clamp 10 is shown in figures 1a and 1b. The same clamp 10 is shown clamped around two pipes 12 and 14 arranged end to end in figures 2a and 2b. Clamps of the type shown in figures 1a and 1b are suitable for high temperature applications (e.g. car exhausts). Furthermore, such clamps are especially suitable for high volume production. In addition, such clamps are manufactured from a relatively small amount of raw materials and from relatively few discrete components.

Clamp 10 comprises a split ring 16 having first and second ends 18 and 20 respectively.

There is a first lug 22 integrally formed on the first end 18. The first lug 22 extends outwardly from the split ring 16 in a substantially radial direction. The first lug 22 comprises a first aperture 26 formed therethrough in a substantially circumferential direction with respect to the split ring 16. Similarly, there is a second lug 24 integrally formed on the second end 20 of the split ring 16. The second lug 24 extends outwardly from the split ring 16 in a substantially radial direction. Again, there is an aperture 28 formed through the second lug 20 in a substantially circumferential direction with respect to the split ring 16. The apertures 26 and 28 communicate with each other when the lugs 22 and 24 are brought into a confronting relationship.

The free end of the first lug 22 comprises a protruding member 30a which extends outwardly from the first lug 22 in a substantially radial direction relative to the split ring 16. Similarly, the free end of the second lug 24 comprises a protruding member 30b which extends outwardly from the second lug 24 in a substantially radial direction relative to the split ring 16. The protruding members 30a and 30b abut against one another when the lugs 22 and 24 are brought into confronting relationship.

The clamp 10 also includes a nut 32 and an associated linear bolt 34. The bolt 34 is not shown in figure 1b. The nut 32 comprises a threaded aperture 33 to threadingly receive a threaded portion 36 of the bolt 34, as is known in the art. Furthermore, the nut 32 is immovably fixed within the aperture 26 of the first lug 22. An O-ring or washer 35 is provided on the threaded portion 36 so as to retain the bolt 34 within the aperture 28 of the second lug 24 when the bolt 34 is not engaged in the threaded aperture 33 of the nut 32.

The split ring 16 has a U-shaped cross-section as shown in figure 3. This U-shaped cross-section enables the split ring 16 to be clamped around adjacent protruding rims 40 and 42 at the adjacent abutting ends of the pipes 12 and 14 respectively. Thus, when the pipes 12 and 14 are placed end to end, the protruding rims 40 and 42 together form a single protruding rim around the joint between the pipes 12 and 14. The lugs 22 and 24 also have U-shaped cross-sections.

The split ring 16 is formed from two discrete circumferential sections 16a and 16b joined together by a connector 38. The first circumferential section 16a extends from the first end 18 of the split ring 16 to a connection end 19 which is joined to the connector 38. Similarly, the second circumferential section 16b extends from the second end 20 of the split ring 16 to a connection end 21 which is joined to the connector 38. In this connected state, there is a small gap 31 between the two connection ends 19 and 21 of the circumferential sections 16a and 16b.

The clamp 10 is shown in a closed configuration in figures 1a to 2b. In this configuration, the clamp 10 has been tightened to its fullest extent by means of the nut 32 and bolt 34 such that the protruding members 30a and 30b abut one another.

In use, in order to join two pipes 12 and 14 together, it is first necessary to completely unscrew the bolt 34 from the nut 32 so that the bolt 34 is only retained in the aperture 28 of the second lug 24 by the O-ring 35.

An operator then manually opens the clamp 10 by pulling apart the first and second ends 18 and 20 of the split ring 16 such that the split ring 16 hinges about the connector 38.

The operator continues to open the clamp 10 until it is possible to longitudinally insert the pipe 12 with the protruding rim 40 into the split ring 16. The operator then also longitudinally inserts the pipe 14 with the protruding rim 42 into the other side of the split ring 16 of the clamp 10.

Once the ends of the pipes 12 and 14 are thus inserted, the operator starts to manually close the clamp 10 by hinging the two sides of the split ring 16 about the connector 38 until it is possible to engage the bolt 34 in the threaded aperture of the nut 32. Care and precision are required, and it can be difficult to engage the bolt 34 if the pipes 12 and 14 and the clamp 12 are in an awkward position.

Having been re-engaged in the nut 32, the bolt 34 is tightened by the operator so as to move the clamp 10 to the closed configuration around the pipes 12 and 14 as shown in figures 2a and 2b.

The present invention seeks to provide an alternative annular clamp which offers various advantages over the prior art.

### SUMMARY OF THE INVENTION

According to a first aspect of the present invention, there is provided an annular clamp comprising: a split ring having two ends; a respective lug integrally formed on each of the ends of the split ring, each lug extending outwardly from the split ring in a substantially radial direction; a respective lug aperture formed through each of the lugs such that when the lugs are brought into a confronting relationship the lug apertures together define a path for receiving a linear bolt; and a nut for receiving a linear bolt, the nut having a threaded aperture, and the nut being moveably retained in one of the lug apertures such that a longitudinal axis of the threaded aperture is moveable within a plane defined by the split ring.

The moveable nut allows the bolt to remain engaged in the nut throughout the clamping procedure which makes this clamp easier to use than prior art clamps.

Advantageously, the nut is moveably retained in said one lug aperture such that the nut is moveable in the substantially radial direction defined by the respective lug.

Advantageously, the nut is moveably retained in said one lug aperture such that the nut is moveable in a direction defined by an axis extending through said one lug aperture and perpendicular to the respective lug.

Advantageously, the nut is moveably retained in said one lug aperture such that the nut is not rotatable about the axis extending through said one lug aperture and perpendicular to the respective lug. This enables the bolt to be tightened into the nut without the nut rotating with the nut as the screw is turned.

In a preferred embodiment, the nut comprises a middle nut section between two end nut sections, the middle nut section extending through said one lug aperture, and the longitudinal axis of the threaded aperture extending in a direction between the two end nut sections.

Advantageously, the end nut sections are adapted so as not to fit through said one lug aperture. More advantageously, at least a part of one of the end nut sections has been outwardly deformed such that said one end nut section does not fit through said one lug aperture.

Advantageously, said one lug aperture is elongate along the substantially radial direction defined by the respective lug, said one lug aperture having a width that is substantially equal to a corresponding width of the middle nut section. Again, such an arrangement prevents the nut from rotating with the bolt as the bolt is turned.

Advantageously, a length of the middle nut section along a direction defined by the longitudinal axis of the threaded aperture is greater than a thickness of the respective lug in which said one lug aperture is formed.

In a preferred embodiment, the annular clamp further comprises a linear bolt for threaded engagement with the nut.

According to a second aspect of the present invention, there is provided an automotive vehicle comprising two pipes joined together by the annular clamp of the first aspect.

According to a third aspect of the present invention, there is provided a method of connecting two pipes using the annular clamp of the first aspect, the method comprising the steps of: ensuring the annular clamp is in an open configuration with the linear bolt extending through the other lug aperture and into threaded engagement with the nut; aligning the pipes in a required connection position within the annular clamp whilst the linear bolt remains in threaded engagement with the nut; and securing the annular clamp by tightening the nut and linear bolt until the lugs are in a confronting relationship.

The claimed method provides the advantage that there is no need for an anti-loss O-ring or washer since the bolt remains engaged in the nut throughout the clamping process.

Other preferred features of the present invention are set out in the appended claims.

### BRIEF DESCRIPTION OF THE DRAWINGS

Embodiments of the present invention will now be described by way of example with reference to the accompanying drawings in which:
Figure 1a shows a prior art clamp having a nut and bolt;
Figure 1b is a perspective view of the arrangement of figure 1a in which the bolt is not shown for clarity;
Figure 2a shows two pipes clamped together by the clamp of figures 1a and 1b;
Figure 2b is a perspective view of the arrangement of figure 2a;
Figure 3 is a partial cross-sectional view of the arrangement of figures 2a and 2b;
Figure 4a shows a clamp having a nut and bolt according to an embodiment of the present invention, the clamp being shown in an open configuration;
Figures 4b and 4c are perspective views of the arrangement of figure 4a;
Figure 5 is a cross-sectional view of the clamp of figure 4a in which the bolt is not shown for clarity;
Figure 6a is a cross-sectional view of a nut according to the present invention, the nut being shown in an initial configuration before engagement with the clamp;
Figure 6b is a perspective view of the nut of figure 6a;
Figure 6c is a perspective view of the nut of figures 6a and 6b, the nut being shown in a final configuration after engagement with the clamp; and
Figure 7 is an enlarged partial view of the clamp of figures 4a to 5 showing in detail a lug of the clamp.

### DETAILED DESCRIPTION OF A PREFERRED EMBODIMENT

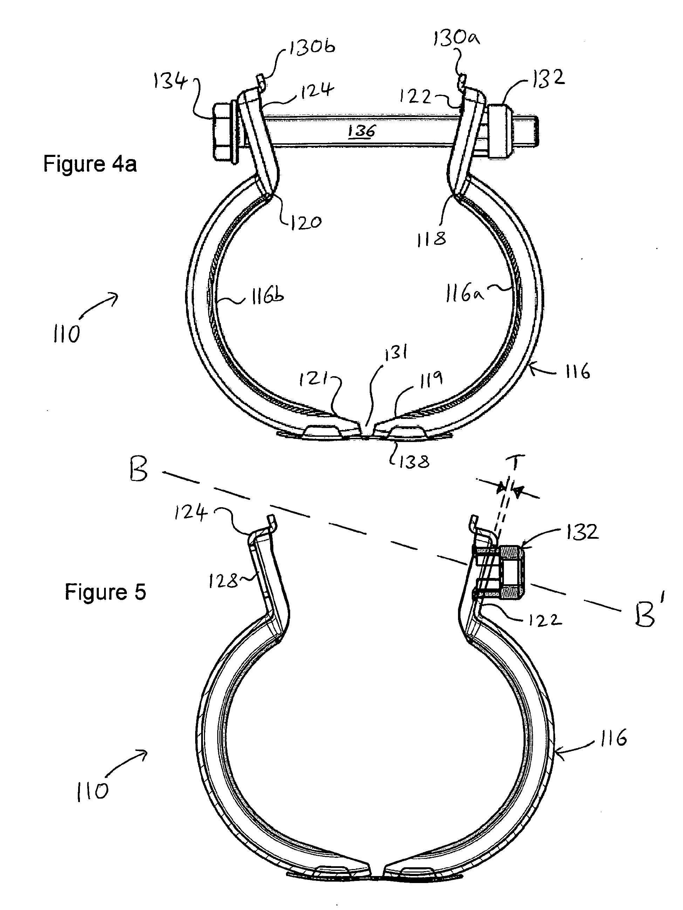

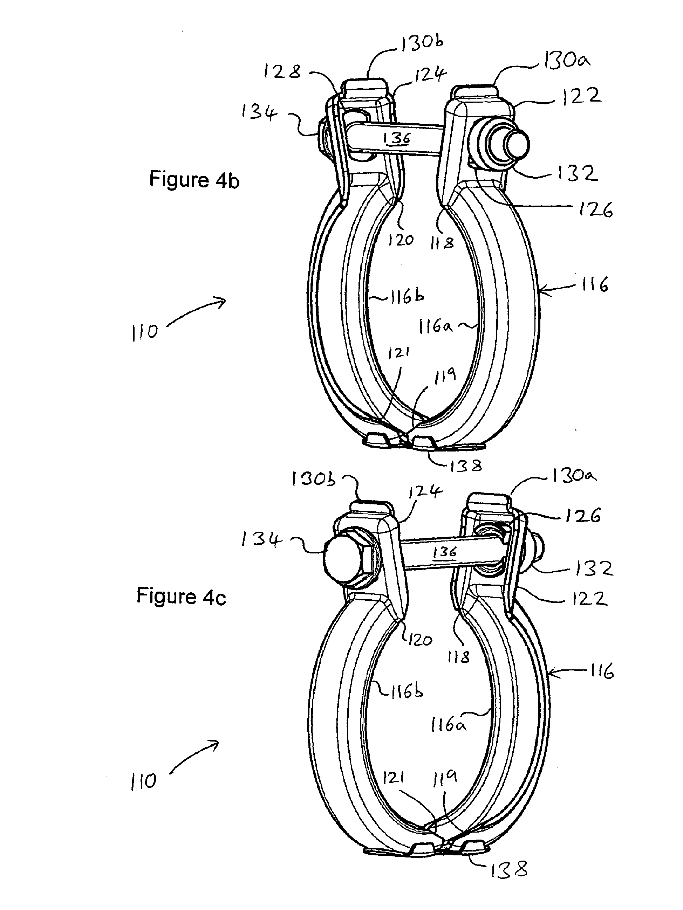

Figures 4a to 4c show an annular clamp 110 according to one embodiment of the present invention.

As for the prior art clamp 10, the clamp 110 comprises a split ring 116 having second ends 118 and 120 respectively and a U-shaped cross-section. There are first and second lugs 122 and 124 integrally formed on the respective first and second ends 118 and 120 of the split ring 116. The lugs 122 and 124 also have U-shaped cross-sections. The first lug 122 comprises a first aperture 126 formed therethrough in a substantially circumferential direction with respect to the split ring 116. Similarly, there is an aperture 128 formed through the second lug 120 in a substantially circumferential direction with respect to the split ring 116. The apertures 126 and 128 communicate with each other when the lugs 122 and 124 are brought into a confronting relationship.

A free end of the first lug 122 comprises an integrally formed protruding member 130a which extends outwardly from the first lug 122 in a substantially radial direction relative to the split ring 116. Similarly, the second lug 124 comprises an integrally formed protruding member 130b which extends outwardly from the second lug 124 in a substantially radial direction relative to the split ring 116. The protruding member 130a and 130b abut against one another when the lugs 122 and 124 face each other in a confronting relationship. This confronting relationship of the lugs 122 and 124 is associated with a closed configuration of the clamp in which the lugs 122 and 124 are mutually spaced to a lesser extent than in the open configuration.

As in the prior art, the split ring 116 is formed from two discrete circumferential sections 116a and 116b joined together by a connector 138. Each of the circumferential sections 116a and 116b are substantially semi-circular thereby defining two halves of the split ring 116. The first circumferential section 116a extends from the first end 118 of the split ring 116 to a connection end 119 which is joined to the connector 138. Similarly, the second circumferential section 116b extends from the second end 120 of the split ring 116 to a connection end 121 which is joined to the connector 138. The connector 138 may be a resilient connector. Furthermore, the connector 138 may be biased to hold the split ring 116 in the open configuration of the clamp 110 which is shown in figures 4a to 4c. When connected, there is a small gap 131 between the two connection ends 119 and 121 of the circumferential sections 116a and 116b.

The clamp 110 also includes a nut 132 and an associated linear bolt 134. The nut 132 is more clearly seen in the cross-sectional view of figure 5. However, for clarity, the bolt 134 is not shown in figure 5. The nut 132 comprises a threaded aperture 133 to threadingly receive a threaded portion 136 of the bolt 134. The nut 132 is moveably retained in the first aperture 126 of the first lug 122.

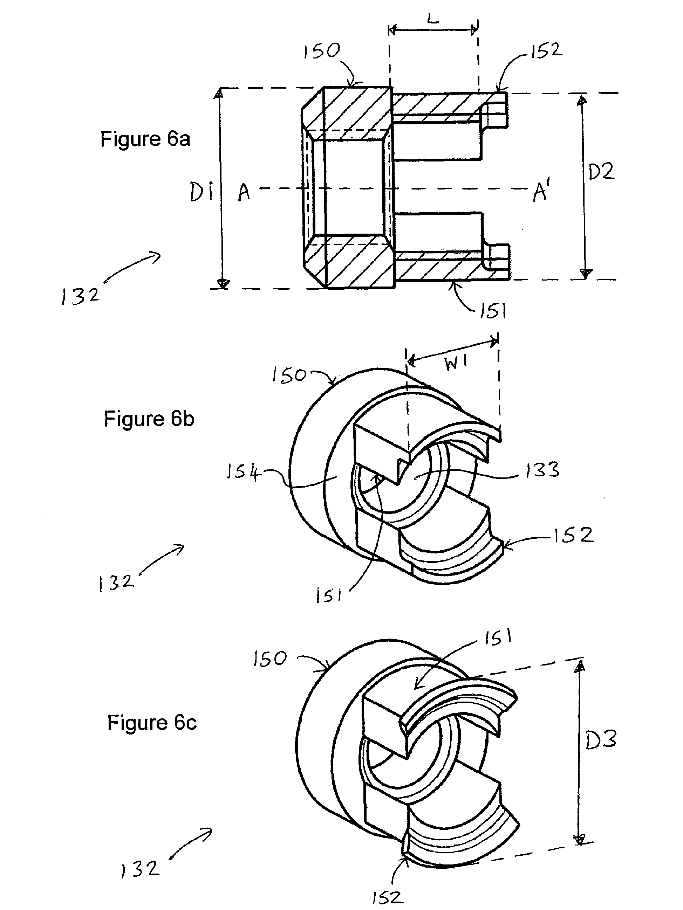

Details of the nut 132 will now be described with reference to figures 6a to 6c.

The nut 132 comprises a middle section 151 between first and second end sections 150 and 152 respectively. A longitudinal axis of the threaded aperture 133 is shown by dashed line AA' in figure 6a. Line AA' extends from the first end section 150 through the middle section 151 to the second end section 152 of the nut 132.

The first end section 150 forms a head of the nut 132 having a diameter D1.

As is most clearly seen in figures 6a and 6b, the middle section 151 is formed from a tube of diameter D2 having opposite longitudinal sides of the tube cut-off such that the middle section 151 has a width W1. Width W1 is therefore necessarily less than diameter D2.

The second end section 152 of the nut 132 is also formed from a tube whose opposite longitudinal sides have been cut-off such that the second end section 152 also has a width W1. A thickness of the tube of the middle section 151 is greater than a thickness of the tube of the second end section 152.

The nut 132 is initially formed with the second end section 152 having a diameter D2 as shown in the initial nut configuration of figures 6a and 6b. However, once the second end section 152 and the middle section 151 of the nut 132 have been inserted into the lug aperture 126, the second end section 152 is outwardly deformed in a radial direction to an increased diameter D3 as shown in figure 6c. The second end portion 152 may be outwardly deformed by crimping, for example.

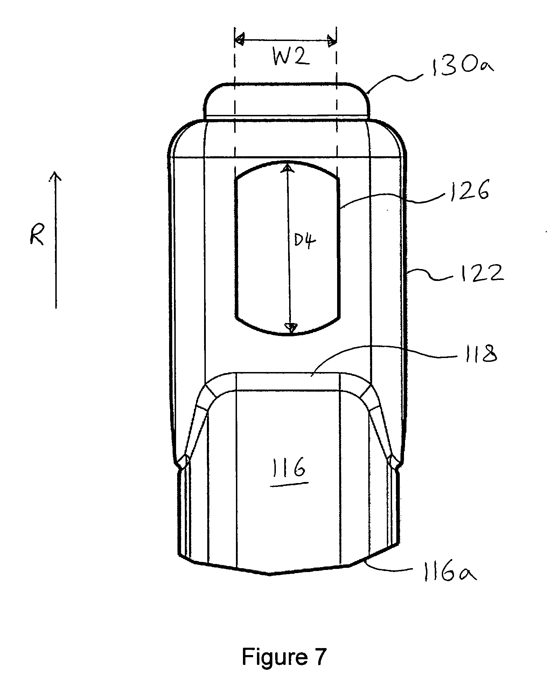

An enlarged section of the clamp 110 is shown in figure 7. In particular, figure 7 clearly shows the first lug 122 and its aperture 126. The aperture 126 is elongate in the substantially radial direction R defined by the first lug 122 as it extends outwardly from the split ring 116. The substantially radial direction R is indicated by an arrow in figure 7.

The aperture 126 comprises opposite sides in the radial direction R which are formed from circumferential sections of a circle of diameter D4. In a direction perpendicular to the radial direction R, the aperture 126 has a constant width W2 along the majority of its length (i.e. except at the curved edges). In the region of the aperture 126, the first lug 122 has a thickness T as shown in figure 5.

The nut is manufactured in the form shown in figures 6a and 6b such that the second end section 152 and the middle section 151 of the nut 132 will fit through the aperture 126 of the first lug 122. In particular, the nut 132 is manufactured such that the diameter D2 of both the second end section 152 and the middle section 151 in the initial nut configuration is smaller than the diameter D4 of the aperture 126. Furthermore, the width W1 of the second end section 152 and the middle section 151 is substantially equal to the width W2 of the aperture 126. Thus, in the initial nut configuration of figures 6a and 6b, the second end section 152 and the middle section 151 of the nut 132 is able to pass through the aperture 126. However, once inserted in the aperture 126, the nut 132 is not able rotate about the longitudinal axis AA' of the threaded aperture 133 of the nut 132.

Once the nut 132 has thus been inserted into the aperture 126, a surface 154 of the first end section 150 of the nut 132 abuts a surface of the first lug 122 adjacent to the aperture 126. In particular, the first end section 150 of the nut 132 has a width defined by the diameter D1 which is larger than the width W2 of the aperture 126 such that the first end section 150 will not fit through the aperture 126. In the embodiment shown, the diameter D1 is larger than the diameter D2. However, this is not an essential feature.

Having inserted the nut 132 into the aperture 126, the second end section 152 of the nut is deformed outwardly by crimping to define an increased diameter D3 of the second end section 152. The diameter D3 is larger than the diameter D4 of the aperture 126 such that the second end section 152 will no longer fit through the aperture 126. With the nut 132 thus inserted in the aperture 126, the middle section 151 of the nut 132 extends through and is moveably retained within the aperture 126.

A length L of the middle section 151 is greater than the thickness T of the lug 122 in the region of the aperture 126 such that the nut 132 is movable in a direction defined by an axis extending through the aperture 126 and perpendicular to the lug 122. Furthermore, since the diameter D2 of the middle section 151 is smaller than the diameter D4 of the aperture 126, the nut 132 is movable in the substantially radial direction R defined by the first lug 122.

In use, due to this movable nut configuration, the bolt 134 may remain in threaded engagement with the nut 132 in a more widely open configuration of the clamp 110 than is possible with the fixed nut 10 of the prior art. This is because if the nut 132 were fixed, the bolt 134 would only be able to be threadingly engaged with the nut 132 along a line perpendicular to the first lug 122 as shown by the dashed line BB' in figure 5. Thus, it would be necessary to provide a much longer second lug 124 and a much longer respective aperture 128 in order for the bolt 134 to remain threadingly engaged with the nut 132 while still passing through the aperture 128. Such a configuration is undesirable due to space constraints which may be present when fitting clamps of this kind. Furthermore, such a configuration would require additional raw materials for the manufacture of the clamp which would undesirably increase production costs. Thus, the fact that the nut 132 is moveably retained in the aperture 126 such that the longitudinal axis AA' of the threaded aperture 133 is movable within a plane defined by the split ring 116 provides advantages in terms of ease of use compared to the prior art clamp 10 having a fixed nut 32.

In use, the clamp 110 may be widely opened to the open configuration shown in figure 4a in which the bolt 134 is in threaded engagement with the nut 132. Then, an operator longitudinally inserts the first pipe 12 with the protruding rim 40 into the U-shaped cross-section of the split ring 116, and next longitudinally inserts the second pipe 14 with the protruding rim 42 into the other side of the split ring 116 of the clamp 110.

Once the ends of the pipe 12 and 14 are thus inserted, the bolt 134 is tightened by the operator so as to move the clamp 110 from the open configuration of figure 4a to a closed configuration in which the lugs 122 and 124 are facing each other in a confronting relationship. In this closed configuration, the lug apertures 126 and 128 communicate with each other so as to define a path for receiving the linear bolt 134. This path is substantially perpendicular to each of the lugs 122 and 124.

Although preferred embodiments of the invention have been described, it is to be understood that these are by way of example only and that various modifications may be contemplated within the scope of the appended claims.

## Claims

1. An annular clamp comprising:
a split ring having two ends;
a respective lug integrally formed on each of the ends of the split ring, each lug extending outwardly from the split ring in a substantially radial direction;
a respective lug aperture formed through each of the lugs such that when the lugs are brought into a confronting relationship the lug apertures together define a path for receiving a linear bolt; and
a nut for receiving a linear bolt, the nut having a threaded aperture, and the nut being moveably retained in one of the lug apertures such that a longitudinal axis of the threaded aperture is moveable within a plane defined by the split ring.

2. The annular clamp of claim 1 wherein the nut is moveably retained in said one lug aperture such that the nut is moveable in the substantially radial direction defined by the respective lug.

3. The annular clamp of claim 1 or claim 2 wherein the nut is moveably retained in said one lug aperture such that the nut is moveable in a direction defined by an axis extending through said one lug aperture and perpendicular to the respective lug.

4. The annular clamp of any preceding claim wherein the nut is moveably retained in said one lug aperture such that the nut is not rotatable about the axis extending through said one lug aperture and perpendicular to the respective lug.

5. The annular clamp of any preceding claim wherein the nut comprises a middle nut section between two end nut sections, the middle nut section extending through said one lug aperture, and the longitudinal axis of the threaded aperture extending in a direction between the two end nut sections.

6. The annular clamp of claim 5 wherein the end nut sections are adapted so as not to fit through said one lug aperture.

7. The annular clamp of claim 6 wherein at least a part of one of the end nut sections has been outwardly deformed such that said one end nut section does not fit through said one lug aperture.

8. The annular clamp of any of claims 5 to 7 wherein said one lug aperture is elongate along the substantially radial direction defined by the respective lug, said one lug aperture having a width that is substantially equal to a corresponding width of the middle nut section.

9. The annular clamp of any of claims 5 to 8 wherein a length of the middle nut section along a direction defined by the longitudinal axis of the threaded aperture is greater than a thickness of the respective lug in which said one lug aperture is formed.

10. The annular clamp of any preceding claim further comprising a linear bolt for threaded engagement with the nut.

11. An automotive vehicle comprising two pipes joined together by the annular clamp of any preceding claim.

12. A method of connecting two pipes using the annular clamp of claim 10, the method comprising the steps of:
ensuring the annular clamp is in an open configuration with the linear bolt extending through the other lug aperture and into threaded engagement with the nut;
aligning the pipes in a required connection position within the annular clamp whilst the linear bolt remains in threaded engagement with the nut; and
securing the annular clamp by tightening the nut and linear bolt until the lugs are in a confronting relationship.
